# EUROPEAN PATENT SPECIFICATION

(11) **EP 1 725 030 B1**
(45) Date of publication and mention of the grant of the patent: **22.02.2017**
(21) Application number: 06252525.8
(22) Date of filing: 15.05.2006
(51) Int. Cl.: H04N 5/76

(54) **Method of providing time shift function in audio/video network and apparatus for the same**
Verfahren und Vorrichtung für einer zeitversetzter Wiedergabefunktion in einer Audio-Video-Netzwerk
Procédé et appareil de reproduction à décalage temporelle dans un réseau audio-vidéo

(30) Priority: 18.05.2005 KR 20050041678
(43) Date of publication of application: 22.11.2006
(73) Proprietor: Samsung Electronics Co., Ltd., Suwon-si, Gyeonggi-do, 443-742 (KR)
(72) Inventor: Kim, Hyun-woo, Incheon Metropolitan City (KR); An, Tae-yun, Yongin-si, Gyeonggi-do (KR); Lee, Byung-hee, 1279 Gireum 1-dong, Seongbuk-gu, Seoul (KR)
(74) Representative: Appleyard Lees IP LLP

(56) References cited:
- EP-A2- 1 286 537
- JP-A- 2001 069 414
- US-A- 5 329 320
- US-A1- 2003 170 003
- US-A1- 2004 045 036
- US-A1- 2004 229 655

## Description

Methods and apparatus consistent with the present invention relate to a time shift function and, more particularly, but not exclusively, to providing a time shift function for decreasing latency time caused by channel switching in an audio/video (A/V) network having a separate content storage apparatus.

Recently, with the advancements in broadcasting technologies, implementation of digital broadcasting through satellite broadcasting, terrestrial broadcasting and cable broadcasting is gradually increasing. In order to receive digital broadcasts provided by a broadcast service provider, a digital-broadcast receiving apparatus such as a set-top box or a digital television (TV) capable of demodulating digital information is required at the user's side. In digital broadcasting, video and audio streams are compressed into packets of digital information prior to being transmitted. The digital-broadcast receiving apparatus then decompresses the digitized packets of video and audio information and outputs them to a display device.

Recent set-top boxes and digital TVs which have been developed to receive digital broadcasts, also provide various functions unavailable in conventional analog TVs.

For example, digital broadcasts commonly include an electronic program guide (EPG) which provides information about broadcast programs, in addition to video and audio information. Thus, viewers can readily obtain information about broadcast programs according to day, channel and time.

Further, digital-broadcast receiving apparatuses may also have a time shift function which enables the apparatuses to extract a specific bit stream from the broadcast streams, store it in memory provided in the set-top box or the digital TV to be played at the request of a user. The time shift function allows viewers to record broadcast content while away and watch it later at their convenience.

Recently, rather than having an embedded memory in the digital-broadcast receiving apparatus, an A/V system having a content storage apparatus separated from the digital-broadcast receiving apparatus has been developed. In this case, broadcast content is stored in the content storage apparatus rather than in the digital-broadcast receiving apparatus. The stored broadcast content is then transmitted from the content storage apparatus to a display device (e.g., TV) to be viewed by a user.

Here, when the user switches channels, the TV directs the digital-broadcast receiving apparatus to switch to a new channel, and the digital-broadcast receiving apparatus extracts broadcast content from the broadcast signals of the switched channel and transmits it to the content storage apparatus in response to the direction of the TV. Thereafter, the content storage apparatus stores the broadcast content transmitted from the digital-broadcasting receiving apparatus and again transmits the stored broadcast content to the TV. As a result, in an A/V network environment in which a separate content storage apparatus is used to provide a time shift function, there is an inconvenience in that a viewer must wait for channel switching for a predetermined time after the viewer has switched channel using a remote controller. Therefore, decreasing the latency time caused by channel switching, when a separate content storage apparatus is used to provide a time shift function in an A/V network, is desired.

Korean Unexamined Patent Publication No. 2002-78339, entitled "Transport Demultiplexer Having Time Shift Function", discloses a technology for overcoming the problem of having a separate personal video recorder (PVR) for supporting a time shift function between a channel terminal and a transport unit by implementing the time shift function within the transport unit using a small logic device. However, Korean Unexamined Patent Publication No. 2002-78339 does not disclose a technology for decreasing the latency time caused by channel switching, generated at the time of channel switching, in an A/V network environment having a separate content storage apparatus to provide a time shift function.

EP 1 286 537 describes a routing apparatus for routing data in a receiver/decoder. The routing apparatus comprises means for receiving realtime user routing control information and means for routing the data from an input to an output, to storage means, and to both the output and the storage means in accordance with the received realtime user routing control information. A command for controlling a data transfer of a bit stream between a source and a destination, where the command is adapted to change at least one of the source and destination of the transfer, and apparatus for receiving and processing data comprising means for receiving the data and means for synchronising the data in two or more different modes, are also enclosed.

Illustrative, non-limiting embodiments of the present invention aim to overcome the above disadvantages and other disadvantages not described above.

According to the present invention there is provided an apparatus and method as set forth in the appended claims. Preferred features of the invention will be apparent from the dependent claims, and the description which follows.

In this way, latency time caused by channel switching, which is generated when a separate content storage apparatus is used to provide a time shift function may be decreased.

For a better understanding of the invention, and to show how embodiments of the same may be carried into effect, reference will now be made, by way of example, to the accompanying diagrammatic drawings in which:
FIG. 1 is a diagram illustrating an A/V system in which exemplary embodiments of the present invention can be used;
FIG. 2 is a diagram illustrating a broadcast receiving apparatus according to an exemplary embodiment of the present invention;
FIG. 3 is a block diagram illustrating a content output apparatus according to an exemplary embodiment of the present invention;
FIG. 4 is a block diagram illustrating a content storage apparatus according to an exemplary embodiment of the present invention;
FIG. 5 is a flowchart illustrating the operation of the A/V system according to an exemplary embodiment of the present invention;
FIG. 6 is a flowchart illustrating a process in which a broadcast receiving apparatus transmits broadcast content to a content storage apparatus;
FIG. 7 is a diagram illustrating a method of providing a time shift function according to an exemplary embodiment of the present invention; and
FIG. 8 is a flowchart illustrating the operation of a content storage apparatus according to an exemplary embodiment of the present invention when a time shift function has been cancelled.

Reference now will be made to the drawings, in which the same reference numerals are used throughout the different drawings to designate the same or similar components.

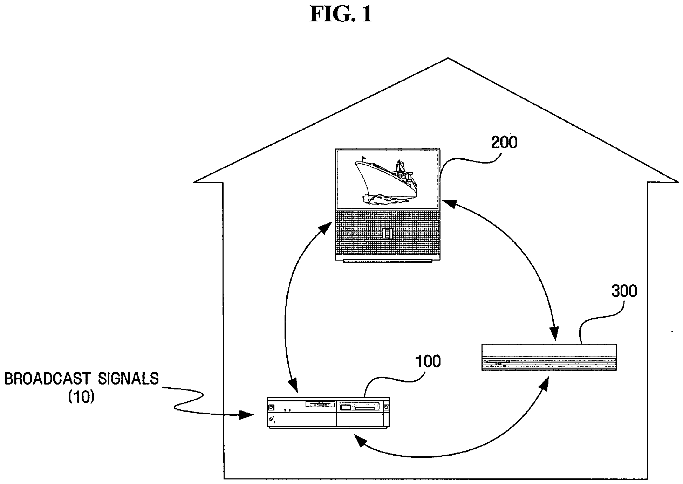

FIG. 1 is a diagram illustrating an A/V system The A/V system illustrated in FIG. 1 includes a broadcast receiving apparatus 100, a content output apparatus 200 and a content storage apparatus 300.

The broadcast receiving apparatus 100 receives broadcast signals 10 transmitted from a broadcast service provider, and restores broadcast content of the received broadcast signals. The broadcast content includes a variety of broadcast programs such as movies, soap operas, or news.

The broadcast receiving apparatus 100 transmits the restored broadcast content to the content output apparatus 200 and the content storage apparatus 300. In this case, the transmission of the broadcast content to the content storage apparatus 300 can be performed when a user does not switch channel after a predetermined time. Further, when the user activates a time shift function, the broadcast receiving apparatus 100 can interrupt the transmission of the broadcast content to the content output apparatus 200. The broadcast receiving apparatus 100 may be implemented using a set-top box or a network interface unit (NIT).

In the descriptions of the present invention, the time shift function refers to a function in which the broadcast receiving apparatus 100 stores the broadcast content included in the received broadcast signals in the content storage apparatus 300, and the content output apparatus 200 provides the broadcast content stored in the content storage apparatus 300 to a display device (not shown) when requested by a user. Therefore, the broadcast content, which is provided to the display device according to the time shift function, is delayed in time with respect to the broadcast content included in the broadcast signals currently received by the broadcast receiving apparatus 100. The time shift function includes detailed functions, such as a pause function, a reverse-play function and a fast-forward function for current broadcast content, and a play function for previously viewed broadcast content.

The content output apparatus 200 outputs the broadcast content, transmitted from the broadcast receiving apparatus 100 or the content storage apparatus 300. For this, the content output apparatus 200 may include a speaker module (not shown) for outputting audio signals and a display module (not shown) for outputting video signals. The content output apparatus 200 may be implemented using a digital TV, a projector, or a monitor.

The content storage apparatus 300 refers to a kind of A/V hard disk drive (HDD) and stores broadcast content transmitted from the broadcast receiving apparatus 100. When the user requests the time shift function, the content storage apparatus 300 transmits the stored broadcast content to the content output apparatus 200.

According to an exemplary embodiment of the present invention, the broadcast receiving apparatus 100 and the content storage apparatus 300 may be connected to the content output apparatus 200 in a daisy chain fashion around the content output apparatus 200. As a result, when the user requests channel switching or the time shift function, the content output apparatus 200 can direct the broadcast receiving apparatus 100 and the content storage apparatus 300 to perform tasks required for the channel switching or the time shift function.

Meanwhile, at the time of the transmission of data between the broadcast receiving apparatus 100, the content output apparatus 200 and the content storage apparatus 300, a predetermined protocol, such as a high-bandwidth digital content protection (HDCP) protocol or a digital transmission content protection (DTCP) protocol, may be used.

According to an exemplary embodiment of the present invention, the A/V network illustrated in FIG. 1 may be implemented using expandable home theater (XHT) technology that acts as middleware for A/V home networking.

The XHT technology is a home network solution using a digital TV, developed by Samsung Electronics Co., Ltd., that was adopted as a standard by the Consumer Electronics Association (CEA).

The XHT technology allows users to control not only A/V devices connected to the digital TV but also several digital TVs using a communication standard, that is, an Internet protocol, which is mainly used in IEEE 1394 cables for stably transmitting high definition (HD) class signals and the Internet. When using the XHT technology, the user in one room can view digital broadcast utilizing the digital broadcast reception function of a digital TV located in another room.

The broadcast receiving apparatus 100, the content output apparatus 200 and the content storage apparatus 300, which constitute the above-described A/V system, are described below in detail.

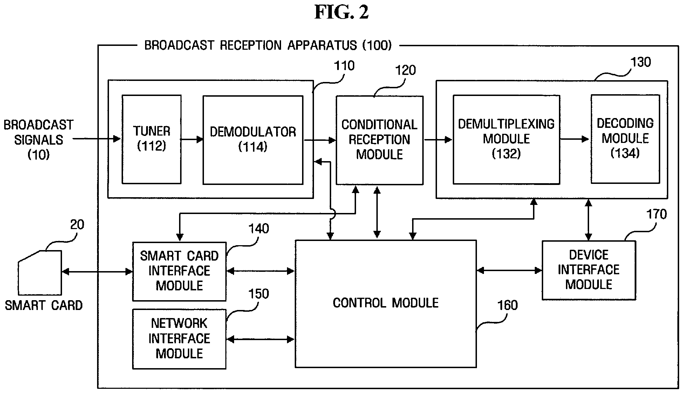

FIG. 2 is a diagram illustrating a broadcast receiving apparatus according to an exemplary embodiment of the present invention.

The illustrated broadcast receiving apparatus 100 includes a broadcasting reception module 110, a conditional reception module 120, a restoration module 130, a smart card interface module 140, a network interface module 150, a control module 160 and a device interface module 170.

The broadcasting reception module 110 functions to receive broadcast signals, and includes a tuner 112 and a demodulator 114.

The tuner 112 receives the broadcast signals of a channel selected by a user using a channel tuning operation, converts the received broadcast signals into intermediate frequencies, and outputs them to the demodulator 114. For example, when the broadcast receiving apparatus 100 illustrated in FIG. 2 receives a satellite broadcast, the tuner 112 detects I and Q signals by processing the signals received from a satellite, and outputs the detected I and Q signals to the demodulator 114.

The demodulator 114 restores transport streams from the signals, which have been converted into the intermediate frequencies, and outputs the restored transport streams to the conditional reception module 120. For example, the demodulator 114 may be composed of a quadratic phase shift keying QPSK demodulator (not shown) and a forward error correction (FEC) demodulator (not shown), and can perform QPSK demodulation or FEC operations.

The conditional reception module 120 performs a user authentication operation using the smart card 20. More particularly, the conditional reception module 120 compares an authentication parameter, which is included in the transport streams provided from the demodulator 114, with another authentication parameter, which is provided by the smart card interface module 140 through the reading of the smart card 20, and determines whether the user of the broadcast receiving apparatus 100 has the right to receive a broadcast. If the two authentication parameters are identical to each other, it can be determined that the user has the right to receive the broadcast. If not, it can be determined that the user does not have the right.

If, as a result of the user authentication, it is determined that the user have the right to receive the broadcast, the conditional reception module 120 descrambles the transport streams. However, if, as a result of the user authentication, it is determined that the user does not have the right the conditional reception module 120 does not descramble the transport streams. As a result, the descrambling operation is performed on the broadcast signals of a channel for which the user has paid for subscription, whereas the descrambling operation is not performed on the broadcast signals of a channel for which the user has not paid.

The restoration module 130 restores the broadcast content using the transport streams descrambled by the conditional reception module 120. However, when the conditional reception module 120 does not descramble the transport streams, the restoration module 130 cannot normally restore the broadcast content included in the transport streams.

In order to restore the broadcast content, the restoration module 130 includes a demultiplexing module 132 and a decoding module 134.

The demultiplexing module 132 separates audio signals and video signals by parsing the transport streams descrambled by the conditional reception module 120, and outputs them to the decoding module 134.

The decoding module 134 includes a video decoder (not shown) and an audio decoder (not shown). The video and audio decoders respectively decode the video signals and audio signals provided from the demultiplexing module 132. The video decoder can be implemented using a video decompression method such as Moving Picture Experts Group (MPEG)-2 or MPEG-4. The audio decoder can be implemented using an audio decompression method such as MPEG Layer-3 Audio (MP3) or Audio Compression 3 (AC3).

The smart card interface module 140 reads a user's smart card 20 and outputs an authentication parameter stored in the smart card 20 to the conditional reception module 120. According to another exemplary embodiment of the present invention, another type of portable storage medium that can store an authentication parameter, such as an SD card or a memory stick, may be used in place of the smart card 20. In this case, the smart card interface module 140 may be replaced with an interface module that can be connected to a corresponding portable storage medium.

The network interface module 150 supports Internet Protocol-based communication, and connects to the broadcast provider 100. The broadcast receiving apparatus 100 can provide services interactive with the broadcast provider 100 to the user through the network interface module 150.

The control module 160 controls the operations of the modules, which constitute the broadcast receiving apparatus 100.

When channel switching is activated by the content output apparatus 200, the control module 160 controls the broadcast signal reception module 110 so as to receive the broadcast signals of a requested channel. Furthermore, when the time shift function is activated by the content output apparatus 200, the control module 160 interrupts the transmission of the broadcast content to the content output apparatus 200. At this time, the control module 160 can request the broadcast content to be provided the content output apparatus 200 from the content storage apparatus 300 through the device interface module 170. For the request, the control module 160 can generate a predetermined command.

Meanwhile, the control module 160 performs the tasks of establishing and disconnecting an A/V network connection with the content output apparatus 200 and the content storage apparatus 300 through the device interface module 170. The device interface module 170 communicates with the content output apparatus 200 and the content storage apparatus 300 via a wired or wireless medium.

More particularly, the device interface module 170 transmits the broadcast content to the content output apparatus 200 and the content storage apparatus 300. Furthermore, the device interface module 170 transmits and receives commands to and from the content output apparatus 200 and the content storage apparatus 300. However, this is merely exemplary, and the broadcast receiving apparatus 100 according another exemplary embodiment of the present invention further includes a separate interface module for transmitting and receiving commands to and from the content output apparatus 200 and the content storage apparatus 300.

The device interface module 170 may use a security protocol, such as a high-bandwidth digital content protection (HDCP) or a digital transmission content protection (DTCP) protocol, in order to prevent the unauthorized copying of the broadcast content at the time of communicating with the content output apparatus 200 and the content storage apparatus 300.

Meanwhile, the device interface module 170 may provide a plurality of communication ports for connection with the content output apparatus 200 and the content storage apparatus 300.

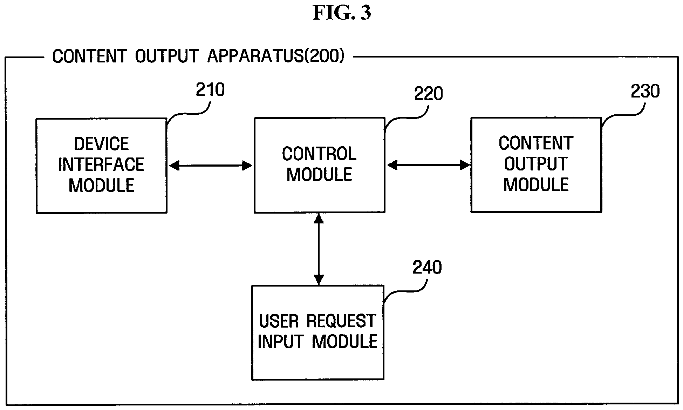

FIG. 3 is a block diagram illustrating the content output apparatus 200 according to an exemplary embodiment of the present invention.

The content output apparatus 200 illustrated in FIG. 3 includes a device interface module 210, a control module 220, a content output module 230 and a user request input module 240.

The device interface module 210 communicates with the broadcast receiving apparatus 100 and the content storage apparatus 300 via a wired or wireless medium.

More particularly, the device interface module 210 receives broadcast content from the broadcast receiving apparatus 100 and the content storage apparatus 300. Furthermore, the device interface module 210 transmits and receives commands to and from the broadcast receiving apparatus 100 and the content storage apparatus 300. However, this is merely exemplary, and the device interface module 210 according another exemplary embodiment of the present invention further includes a separate interface module for transmitting and receiving commands to and from the broadcast receiving apparatus 100 and the content storage apparatus 300.

The device interface module 210 may use a security protocol, such as an HDCP or DTCP protocol, in order to prevent the unauthorized copying of the broadcast content at the time of communicating with the broadcast receiving apparatus 100 and the content storage apparatus 300.

Meanwhile, the device interface module 210 may provide a plurality of communication ports for connection with the broadcast receiving apparatus 100 and the content storage apparatus 300.

The control module 220 controls the operations of functional blocks, which constitute the content output apparatus 200.

When channel switching is activated by the user request input module 240, the control module 220 performs channel switching from the broadcast receiving apparatus 100 through the device interface module 210. Furthermore, when the time shift function is activated by the device interface module 210, the control module 230 performs the time shift function from the broadcast receiving apparatus 100 through the device interface module 210. Here, the control module 220 may generate a predetermined command.

Meanwhile, the control module 220 performs the tasks of establishing and disconnecting an A/V network connection with the broadcast receiving apparatus 100 and the content storage apparatus 300.

The content output module 230 outputs the broadcast content received by the device interface module 210 to the user. For this, the content output module 230 may include a speaker module (not shown) and a display module (not shown). The speaker module outputs audio signals which constitute the broadcast audio content, and the display module outputs video signals which constitute the broadcast video content.

The user request input module 240 receives control commands from the user. For example, the user request input module 240 may receive a channel switching request, a time shift request or the like from the user.

For this, the user request input module 240 may provide an input means, such as a keypad, a touch screen or the like. Furthermore, the user request input module 240 may provide a wireless interface module, which can receive control signals through a wireless medium, such as an infrared (IR) receiver or a Bluetooth module. As a result, the user can input desired control signals through a remote controller or a home server.

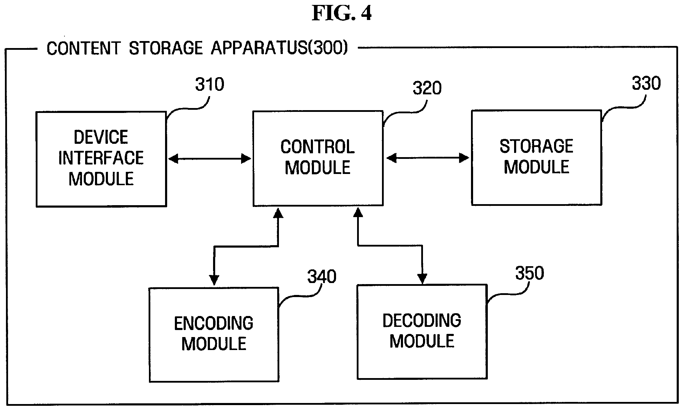

FIG. 4 is a block diagram illustrating the content storage apparatus 300 according to an exemplary embodiment of the present invention.

The content storage apparatus 300 illustrated in FIG. 4 includes a device interface module 310, a control module 320, a storage module 330, an encoding module 340 and a decoding module.

The device interface module 310 communicates with the broadcast receiving apparatus 100 and the content output apparatus 200 via a wired or wireless medium.

More particularly, the device interface module 310 receives broadcast content from the broadcast receiving apparatus 100 and transmits the broadcast content to the content output apparatus 200. Furthermore, the device interface module 310 transmits and receives commands to and from the broadcast receiving apparatus 100 and the content output apparatus 200. However, this is merely exemplary, and the content storage apparatus 300 according another exemplary embodiment of the present invention may further include a separate interface module for transmitting and receiving commands to and from the broadcast receiving apparatus 100 and the content output apparatus 200.

The device interface 310 may use a security protocol, such as an HDCP or DTCP protocol, in order to prevent the unauthorized copying of the broadcast content at the time of communicating with the broadcast receiving apparatus 100 and the content output apparatus 200.

Meanwhile, the device interface module 310 may provide a plurality of communication ports for connection with the broadcast receiving apparatus 100 and the content output apparatus 200.

The control module 320 controls the operations of functional blocks, which constitute the content storage apparatus 300.

When the time shift function is activated by the broadcast receiving apparatus 100 or the content output apparatus 200, the control module 320 controls the decoding module 350 so as to decode the broadcast content stored in the storage module 330. Thereafter, the control module 320 transmits the broadcast content decoded by the decoding module 350 to the content output apparatus 200 via the device interface module 310.

Furthermore, when receiving the channel switching request from the broadcast receiving apparatus 100 or the content output apparatus 200, the control module 230 interrupts the transmission of the broadcast content to the content output apparatus 200.

Meanwhile, the control module 320 performs the tasks of establishing and disconnecting an A/V network connection with the broadcast receiving apparatus 100 or the content output apparatus 200 through the device interface module 310.

The storage module 330 stores the broadcast content transmitted from the broadcast receiving apparatus 100. The broadcast content stored in the storage module 330 is encoded by the encoding module 340 using an A/V data compression method, such as MPEG-2, MPEG-4, MP3 or AC3.

The decoding module 350 decodes the content stored in the storage module 330. The A/V data decoding method used by the decoding module 350 corresponds to the A/V data encoding method used by the encoding module 340.

In the exemplary embodiments of FIGS. 2 to 4, the term 'module' refers to a software component or a hardware component, such as a field programmable gate-array (FPGA) or an application-specific integrated circuit (ASIC), and performs a specific function. However, the module is not limited to a software or hardware. The module may be configured to exist in an addressable storage medium or to perform one or more processes. Therefore, for example, the module includes components, such as software components, object-oriented software components, class components, or task components, processes, functions, attributes, procedures, subroutines, the segments of program code, drivers, firmware, micro-code, a circuit, data, a database, data structures, tables, arrays, and variables. Functions provided by the components and the modules are integrated into a smaller number of components and modules, or are separated into additional components and modules.

The operation of the broadcast receiving apparatus 100, the content output apparatus 200 and the content storage apparatus 300 are described below in detail.

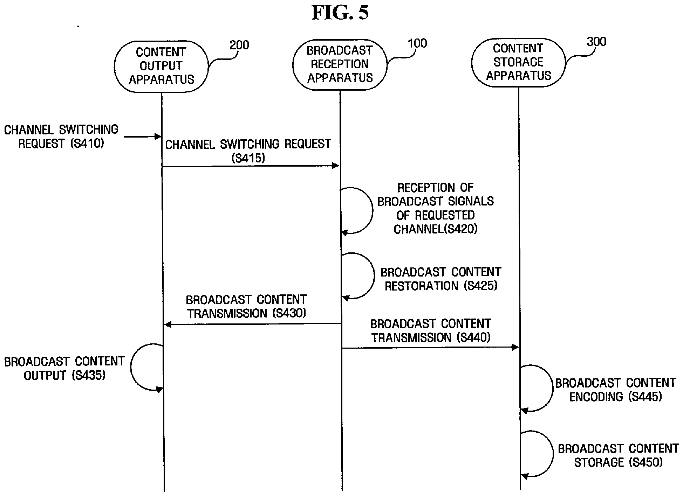

FIG. 5 is a flowchart illustrating the operation of the A/V system according to an exemplary embodiment of the present invention. The flowchart illustrated in FIG. 5 illustrates a predetermined process when the A/V system is not activated with a time shift function.

When a channel switching request is received through the user request input module 240 of the content output apparatus 200 at operation S410, the control module 220 performs channel switching from the broadcast receiving apparatus 100 via the device interface module 210 at operation S415. At this time, the control module 220 generates a command for the channel switching and transmits it to the broadcast receiving apparatus 100 via the device interface module 210.

When the device interface module 170 of the broadcast receiving apparatus 100 receives the command for the channel switching from the content output apparatus 200, the broadcast signal reception module 110 performs a channel tuning operation to receive the broadcast signals of a requested channel at operation S420. Thereafter, the restoration module 130 restores broadcast content included in the broadcast signals received by the broadcast signal reception module 110 at operation 425. Then, the device interface module 170 of the broadcast receiving apparatus 100 transmits the restored broadcast content to the content output apparatus 200 at operation S430. Prior to transmitting the broadcast content, the control module 160 of the broadcast receiving apparatus 100 and the control module 220 of the content output apparatus 200 can perform the task of establishing an A/V network connection respectively through the device interface module 170 of the broadcast receiving apparatus 100 and the device interface module 210 of the content output apparatus 200.

When the device interface module 210 of the content output apparatus 200 receives the broadcast content from the broadcast receiving apparatus 100, the content output module 230 outputs it to a display device at operation S435.

Meanwhile, the control module 160 of the broadcast receiving apparatus 100 transmits the broadcast content restored by the restoration module 130 to the content storage apparatus 300 via the device interface module 170. Before the transmission of the broadcast content, the control module 160 of the broadcast receiving apparatus 100 and the control module 320 of the content storage apparatus 300 may perform the task of establishing an A/V network connection respectively through the device interface module 170 of the broadcast receiving apparatus 100 and the device interface module 310 of the content storage apparatus 300.

When the device interface module 310 of the content storage apparatus 300 receives the broadcast content from the broadcast receiving apparatus 100, the encoding module 340 encodes the received broadcast content using a predetermined A/V compression method at operation S445.

Thereafter, the storage module 330 stores the broadcast content encoded by the encoding module 340 at operation S450.

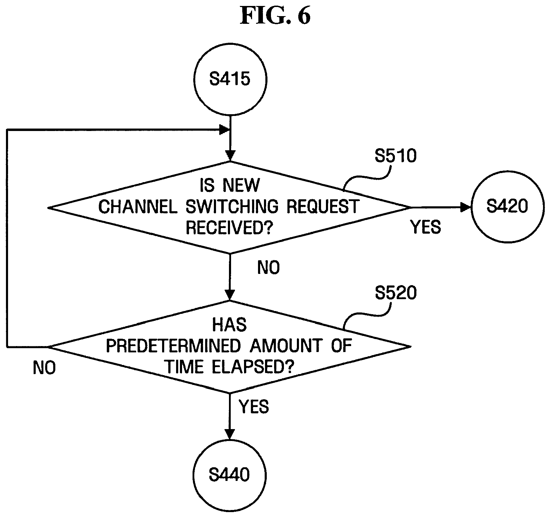

Meanwhile, operation S440, at which the broadcast receiving apparatus 100 transmits the broadcast content to the content storage apparatus 300, can be performed depending on a predetermined condition, which is described below with reference to FIG. 6.

When receiving the channel switching request from the content output apparatus 200 at operation S415, the control unit 160 of the broadcast receiving apparatus 100 determines whether a new channel switching request has been received from the content output apparatus 200 at operation S510. If it is determined that the device interface module 170 of the broadcast receiving apparatus 100 has received the new channel switching request from the content output apparatus 200, the control module 160 controls the functional blocks such that the broadcast receiving apparatus 100 performs operations S420 to S430 of FIG. 5.

However, if it is determined in operation S510 that the new channel switching request has not been received, the control module 160 of the broadcast receiving apparatus 100 determines whether a predetermined amount of time has elapsed from the reception time of a previous channel switching request at operation S520. If, it is determined that the new channel switching request has not been received after the predetermined time, the control module 160 transmits the broadcast content, which is restored by the restoration module 130, to the content storage module 300 via the device interface module 170. At this time, the predetermined time is set to the average time that has elapsed from the input of a previous channel switching request to the input of a new channel switching request when a user continuously switches channel using the channel switch buttons of a remote controller in order to browse channels. The predetermined time may be acquired, for example, through sample tests of many beta users.

As a result, the content storage apparatus 300 cannot store broadcast content while the user browses channels, but stores the broadcast content when it is determined that the user has actually selected a specific channel and is viewing the broadcast content of the channel.

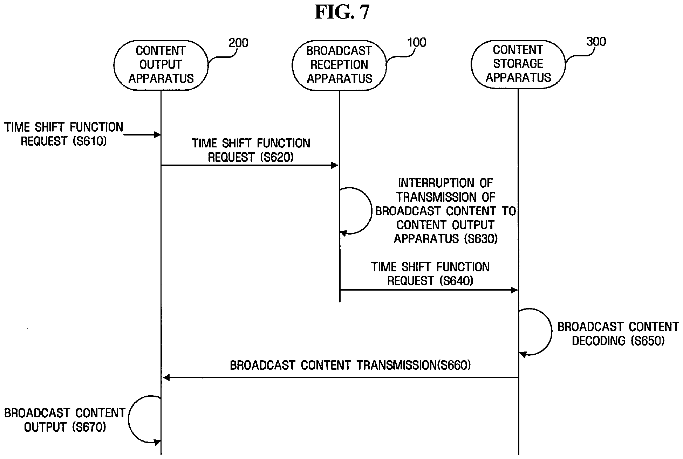

An exemplary embodiment in which a user activates the time shift function while the content storage apparatus 300 stores the broadcast content is described below with reference to FIG. 7.

FIG. 7 is a diagram illustrating a method of providing a time shift function according to an exemplary embodiment of the present invention.

When the time shift function is requested through the user request input module 220 of the content output apparatus 200 at operation S610, the control module 220 activate the time shift function from the broadcast receiving apparatus 100 via the device interface module 210 at operation S620. At this time, the control module 220 can generate a command for performing the time shift function and transmit it to the broadcast receiving apparatus 100 via the device interface module 210.

When the device interface module 170 of the broadcast receiving apparatus 100 receives the command for the time shift function, the control module 160 of the broadcast receiving apparatus 100 interrupts the transmission of the broadcast content to the content output apparatus 200 at operation S630. At this time, the control module 160 of the broadcast receiving apparatus 100 and the control module 220 of the content output apparatus 200 can perform the task of disconnecting the A/V network connection respectively through the device interface module 170 of the broadcast receiving apparatus 100 and the device interface module 210 of the content output apparatus 200.

Thereafter, the control module 160 of the broadcast receiving apparatus 100 activates the time shift function from the content storage apparatus 300 via the device interface module 170 at operation S640. At this time, the device interface module 170 can transmit the command for the time shift function, which is received from the content output apparatus 200 or generated by the control module 160, to the content storage apparatus 300.

When the device interface module of the content storage apparatus 300 receives the command for the time shift function from the broadcast receiving apparatus 100, the decoding module 350 decodes the broadcast content stored in the storage module 330 at operation S650.

Thereafter, the device interface module 310 of the content storage apparatus 300 transmits the decoded broadcast content to the content output apparatus 200 at operation S660. Before the transmission of the broadcast content, the control module 220 of the content output apparatus 200 and the control module 320 of the content storage apparatus 300 may perform the task of establishing an A/V network connection respectively through the device interface module 210 of the content output apparatus 200 and the device interface module 310 of the content storage apparatus 300.

When the device interface module 210 of the content output apparatus 200 receives the broadcast content from the content storage apparatus 300, the content output module 230 outputs the received broadcast content to the display device at operation S670.

According to another exemplary embodiment of the present invention, operation S640 of FIG. 7 may be replaced with the operation at which the control module 200 of the broadcasting output apparatus 200 directly activates the time shift function from the content storage apparatus 300 via the device interface module 210.

Meanwhile, of the operations illustrated in FIG. 7, operations S440 to S450, described with reference to FIG. 5, are continuously performed between the broadcast receiving apparatus 100 and content storage apparatus 300. That is, the device interface module of the content storage apparatus 300 continuously receives the broadcast content from the broadcast receiving apparatus 100, the encoding module 340 encodes the received broadcast content, and the storage module 330 stores the encoded broadcast content.

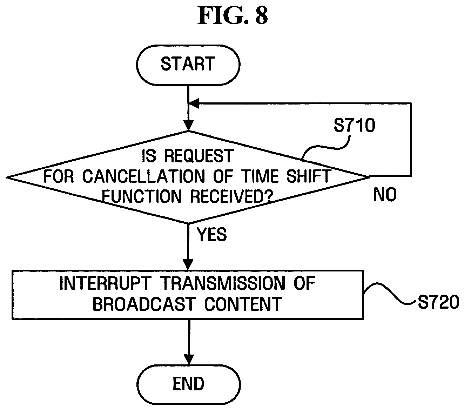

Furthermore, when the user performs channel switching during the performance of operations illustrated FIG. 7, the content output apparatus 200 activates the channel switching from the broadcast receiving apparatus 100, as at operation S415 of FIG. 5. Therefore, the control module 160 of the broadcast receiving apparatus 100 can cancel the time shift function from the content storage apparatus 300 via the device interface module 170. Alternatively, the control module 220 of the content output module 200 can directly cancel the time shift function from the content storage apparatus 300 via the device interface module 210. The operation of the content storage apparatus 300 at the time of cancellation of the time shift function is described with reference to FIG. 8

When the device interface module 310 of the content storage apparatus 300 receives a request for the cancellation of the time shift function from the broadcast receiving apparatus 100 or the content output apparatus 200 at operation S710, the control module 320 can interrupt the transmission of the broadcast content to the content output apparatus 200 at operation S720. At this time, the control module 320 of the content storage apparatus 300 and the control module 220 of the content output apparatus 200 can perform the task of releasing the A/V network connection respectively through the device interface module 310 of the content storage apparatus 300 and the device interface module 210 of the content output apparatus 200.

Meanwhile, according to another exemplary embodiment of the present invention, the channel switching, the time shift function and the time shift function cancellation, which are transmitted and received between the broadcast receiving apparatus 100, the content output apparatus 200 and the content storage apparatus 300 at the channel switching and time shift function activated the user, may be directly transmitted to each of the broadcast receiving apparatus 100, the content output apparatus 200 and the content storage apparatus 300 through a separate server (not shown) which controls the A/V system.

As described above, according to a method of providing a time shift function in the A/V network apparatus of preferred embodiments of the present invention and apparatuses for the same, the latency time caused by channel switching can be decreased.

Although the exemplary embodiments of the present invention have been disclosed for illustrative purposes, those skilled in the art will appreciate that various modifications, additions and substitutions are possible, without departing from the scope of the invention as disclosed in the accompanying claims.

## Claims

1. A method of providing a time shift function, the method comprising :
receiving broadcast content from a broadcast receiving apparatus (100);
storing the received broadcast content; and
transmitting the stored broadcast content to a content output apparatus (200) if the time shift function is requested; **characterized in that** receiving the broadcast content is performed if channel switching is not requested within a predetermined time.

2. The method as claimed in claim 1, further comprising the step of interrupting the transmission of the broadcast content to the content output apparatus (200) if channel switching is requested.

3. The method as claimed in claim 2, wherein:
transmitting the stored broadcast content to the content output apparatus (200) comprises establishing an audio/video (A/V) network connection with the content output apparatus (200); and
interrupting the transmission of the broadcast content to the content output apparatus comprises disconnecting the A/V network connection with the content output apparatus (200).

4. A broadcast receiving apparatus comprising:
a restoration module (110) which is arranged in use to restore broadcast content of received broadcast signals;
a device interface module (170) which transmit the restored broadcast content to a content output apparatus (200) and a content storage apparatus (300); and
a control module (160) which interrupt the transmission of the broadcast content to the content output apparatus (200) by the device interface module (170) if a time shift function is requested; **characterized in that** the device interface module (170) transmits the restored broadcast content to the content storage apparatus (300) if a channel switching request has not been received within a predetermined time.

5. The broadcast receiving apparatus as claimed in claim 4, wherein, if channel switching is requested after the control module (160) has interrupted the transmission of the broadcast content to the content output apparatus (200):
the restoration module (110) restores broadcast content of broadcast signals of a new channel according to the channel switching request; and
the device interface module (170) transmits the restored broadcast content of the broadcast signals of the channel to the content output apparatus (200).

6. The broadcast receiving apparatus as claimed in claim 5, wherein the control module (160) establishes or disconnects audio/video network connections between the device interface module (170), the content output apparatus (200), and the content storage apparatus (300).

7. A content storage apparatus, comprising:
a device interface module (310) which is arranged in use to receive broadcast content from a broadcast receiving apparatus (100);
a storage module (300) which is arranged in use to store the received broadcast content; and
a control module (320) which is arranged in use to transmit the stored broadcast content to a content output apparatus through the device interface module if a time shift function is requested; **characterized in that** the device interface module (310) receives the broadcast content from the broadcast receiving apparatus (100) if channel switching is not requested within a predetermined time.

8. The content storage apparatus as claimed in claim 7, wherein the control module (320) interrupts the transmission of the broadcast content to the content output apparatus (200) if channel switching is requested.

9. The content storage apparatus as claimed in claim 8, wherein the control module (320) establishes or disconnects audio/video network connections between the device interface module (310), the content output apparatus (200), and the content storage apparatus.

## Patentansprüche

1. Verfahren zum Bereitstellen einer Zeitversetzungsfunktion, das Verfahren umfassend:
Empfangen von Rundfunkinhalten von einer Rundfunk-Empfangsvorrichtung (100);
Speichern der empfangenen Rundfunkinhalte; und
Übertragen der gespeicherten Rundfunkinhalte an eine Inhaltsausgabevorrichtung (200), wenn die Zeitversetzungsfunktion angefordert wird; **dadurch gekennzeichnet, dass** das Empfangen der Rundfunkinhalte durchgeführt wird, wenn innerhalb einer vorbestimmten Zeit keine Kanalumschaltung angefordert wird.

2. Verfahren nach Anspruch 1, ferner umfassend den Schritt des Unterbrechens der Übertragung der Rundfunkinhalte an die Inhaltsausgabevorrichtung (200), wenn eine Kanalumschaltung angefordert wird.

3. Verfahren nach Anspruch 2, wobei:
das Übertragen der gespeicherten Rundfunkinhalte an die Inhaltsausgabevorrichtung (200) das Herstellen einer Audio/Video(A/V)-Netzwerkverbindung mit der Inhaltsausgabevorrichtung (200) umfasst; und
das Unterbrechen der Übertragung der Rundfunkinhalte an die Inhaltsausgabevorrichtung das Trennen der A/V-Netzwerkverbindung mit der Inhaltsausgabevorrichtung (200) umfasst.

4. Rundfunk-Empfangsvorrichtung, umfassend:
ein Wiederherstellungsmodul (110), das im Gebrauch so eingerichtet ist, um die Rundfunkinhalte der empfangenen Rundfunksignale wiederherzustellen;
ein Geräteschnittstellenmodul (170), das die wiederhergestellten Rundfunkinhalte an eine Inhaltsausgabevorrichtung (200) und eine Inhaltsspeichervorrichtung (300) überträgt; und
ein Steuerungsmodul (160), das die Übertragung der Rundfunkinhalte an die Inhaltsausgabevorrichtung (200) durch das Geräteschnittstellenmodul (170) unterbricht, wenn eine Zeitversetzungsfunktion angefordert wird; **dadurch gekennzeichnet, dass** das Geräteschnittstellenmodul (170) die wiederhergestellten Rundfunkinhalte an die Inhaltsspeichervorrichtung (300) überträgt, wenn eine Kanalumschaltanforderung nicht innerhalb einer vorbestimmten Zeit empfangen wurde.

5. Rundfunk-Empfangsvorrichtung nach Anspruch 4, wobei, wenn eine Kanalumschaltung angefordert wird, nachdem das Steuerungsmodul (160) die Übertragung der Rundfunkinhalte an die Inhaltsausgabevorrichtung (200) unterbrochen hat:
das Wiederherstellungsmodul (110) die Rundfunkinhalte der Rundfunksignale eines neuen Kanals gemäß der Kanalumschaltanforderung wiederherstellt; und
das Geräteschnittstellenmodul (170) die wiederhergestellten Rundfunkinhalte der Rundfunksignale des Kanals an die Inhaltsausgabevorrichtung (200) überträgt.

6. Rundfunk-Empfangsvorrichtung nach Anspruch 5, wobei das Steuerungsmodul (160) die Audio/Video-Netzwerkverbindungen zwischen dem Geräteschnittstellenmodul (170), der Inhaltsausgabevorrichtung (200) und der Inhaltsspeichervorrichtung (300) herstellt oder trennt.

7. Inhaltsspeichervorrichtung, umfassend:
ein Geräteschnittstellenmodul (310), das im Gebrauch so eingerichtet ist, um die Rundfunkinhalte von einer Rundfunk-Empfangsvorrichtung (100) zu empfangen;
ein Speichermodul (300), das im Gebrauch so eingerichtet ist, um die empfangenen Rundfunkinhalte zu speichern; und
ein Steuerungsmodul (320), das im Gebrauch so eingerichtet ist, um die gespeicherten Rundfunkinhalte an eine Inhaltsausgabevorrichtung durch das Geräteschnittstellenmodul zu übertragen, wenn eine Zeitversetzungsfunktion angefordert wird; **dadurch gekennzeichnet, dass** das Geräteschnittstellenmodul (310) die Rundfunkinhalte von der Rundfunk-Empfangsvorrichtung (100) empfängt, wenn innerhalb einer vorbestimmten Zeit keine Kanalumschaltung angefordert wird.

8. Inhaltsspeichervorrichtung nach Anspruch 7, wobei das Steuerungsmodul (320) die Übertragung der Rundfunkinhalte an die Inhaltsausgabevorrichtung (200) unterbricht, wenn eine Kanalumschaltung angefordert wird.

9. Inhaltsspeichervorrichtung nach Anspruch 8, wobei das Steuerungsmodul (320) die Audio/Video-Netzwerkverbindungen zwischen dem Geräteschnittstellenmodul (310), der Inhaltsausgabevorrichtung (200) und der Inhaltsspeichervorrichtung herstellt oder trennt.

## Revendications

1. Procédé de mise en oeuvre d'une fonction de décalage temporel, le procédé comprenant :
la réception d'un contenu de diffusion en provenance d'un appareil de réception de diffusion (100) ;
le stockage du contenu de diffusion reçu ; et
la transmission du contenu de diffusion stocké à un appareil d'émission de contenu (200) si la fonction de décalage temporel est demandée ;
**caractérisé en ce que** la réception du contenu de diffusion est exécutée si aucune commutation de canal n'est demandée dans un temps prédéterminé.

2. Procédé selon la revendication 1, comprenant en outre l'étape d'interruption de la transmission du contenu de diffusion à l'appareil d'émission de contenu (200) si la commutation de canal est demandée.

3. Procédé selon la revendication 2, dans lequel :
la transmission du contenu de diffusion stocké à l'appareil d'émission de contenu (200) comprend l'établissement d'une connexion réseau audio/vidéo (A/V) avec l'appareil d'émission de contenu (200) ; et
l'interruption de la transmission du contenu de diffusion à l'appareil d'émission de contenu comprend la déconnection de la connexion réseau A/V avec l'appareil d'émission de contenu (200).

4. Appareil de réception de diffusion comprenant :
un module de restauration (110) qui est conçu pour, en utilisation, restaurer du contenu de diffusion de signaux de diffusion reçus ;
un module d'interface de dispositif (170) qui transmet le contenu de diffusion restauré à un appareil d'émission de contenu (200) et un appareil de stockage de contenu (300) ; et
un module de commande (160) qui interrompt la transmission du contenu de diffusion de l'appareil d'émission de contenu (200) par le module d'interface de dispositif (170) si une fonction de décalage temporel est demandée ;
**caractérisé en ce que** le module d'interface de dispositif (170) transmet le contenu de diffusion restauré à l'appareil de stockage de contenu (300) si aucune demande de commutation de canal n'a été reçue dans un temps prédéterminé.

5. Appareil de réception de diffusion selon la revendication 4, dans lequel, si une commutation de canal est demandée après que le module de commande (160) a interrompu la transmission du contenu de diffusion à l'appareil d'émission de contenu (200) ;
le module de restauration (110) restaure le contenu de diffusion de signaux de diffusion d'un nouveau canal en fonction de la demande de commutation de canal ; et
le module d'interface de dispositif (170) transmet le contenu de diffusion restauré des signaux de diffusion du canal à l'appareil d'émission de contenu (200).

6. Appareil de réception de diffusion selon la revendication 5, dans lequel le module de commande (160) établit ou déconnecte des connexions réseau audio/vidéo entre le module d'interface de dispositif (170), l'appareil d'émission de contenu (200), et l'appareil de stockage de contenu (300).

7. Appareil de stockage de contenu, comprenant :
un module d'interface de dispositif (310) qui est conçu pour, en utilisation, recevoir du contenu de diffusion en provenance d'un appareil de réception de diffusion (100) ;
un module de stockage (300) qui est conçu pour, en utilisation, stocker le contenu de diffusion reçu ; et
un module de commande (320) qui est conçu pour, en utilisation, transmettre le contenu de diffusion stocké à un appareil d'émission de contenu par l'intermédiaire du module d'interface de dispositif si une fonction de décalage temporel est demandée ;
**caractérisé en ce que** le module d'interface de dispositif (310) reçoit le contenu de diffusion en provenance de l'appareil de réception de diffusion (100) si aucune commutation de canal n'est demandée dans un temps prédéterminé.

8. Appareil de stockage de contenu selon la revendication 7, dans lequel le module de commande (320) interrompt la transmission du contenu de diffusion à l'appareil d'émission de contenu (200) si une commutation de canal est demandée.

9. Appareil de stockage de contenu selon la revendication 8, dans lequel le module de commande (320) établit ou déconnecte des connexions réseau audio/vidéo entre le module d'interface de dispositif (310), l'appareil d'émission de contenu (200), et l'appareil de stockage de contenu.
